# EUROPÄISCHE PATENTSCHRIFT

(11) **EP 3 013 123 B1**
(45) Veröffentlichungstag und Bekanntmachung des Hinweises auf die Patenterteilung: **31.01.2018**
(21) Anmeldenummer: 14189719.9
(22) Anmeldetag: 21.10.2014
(51) Int. Cl.: H05B 37/02

(54) **Beleuchtungssystem und Steuerungsverfahren hierfür**
Lighting system and control method for the same
Système d'éclairage et procédé de commande correspondant

(43) Veröffentlichungstag der Anmeldung: 27.04.2016
(73) Patentinhaber: Grau, Tobias, 25462 Rellingen (DE)
(72) Erfinder: Grau, Tobias, 25462 Rellingen (DE)
(74) Vertreter: Keil & Schaafhausen Patent- und Rechtsanwälte PartGmbB

(56) Entgegenhaltungen:
- EP-A1- 2 587 895
- WO-A1-2009/003279
- WO-A1-2014/009422
- WO-A2-2011/053132
- DE-B4-102012 204 579
- US-A1- 2005 231 134

## Beschreibung

Die vorliegende Erfindung betrifft ein Beleuchtungssystem mit einer Vielzahl von Leuchten, wobei jede Leuchte ein Leuchtensteuerungsmodul, ein Bewegungsmeldermodul und ein Kommunikationsmodul aufweist, wobei das Leuchtensteuerungsmodul mit dem Bewegungsmeldermodul und dem Kommunikationsmodul verbunden ist.

Moderne Beleuchtungssysteme beleuchten nicht einfach nur bestimmte Bereiche eines Gebäudes oder eines außerhalb eines Gebäudes angeordneten Gebiets, sondern erfüllen zusätzlich Gesundheits- und Sicherheitsaspekte, zielen darauf ab, die Arbeitsatmosphäre z.B. in einem Büro zu verbessern, und sollen außerdem ein zeitgemäßes Design verwirklichen. Weiter wird darauf Wert gelegt, dass Beleuchtungssysteme möglichst energieeffizient arbeiten. Für solche Aufgaben werden sogenannte intelligente Beleuchtungssysteme eingesetzt, die sich dadurch auszeichnen, dass die Leuchten miteinander kommunizieren.

Ein derartiges Beleuchtungssystem mit mehreren in einem Gebäude oder Raum angeordneten Leuchten ist bereits aus der Druckschrift DE 10 2012 204 579 B4 bekannt. Bei der bekannten Beleuchtungseinrichtung weisen die Leuchten Kommunikationseinrichtungen auf, so dass sie zumindest teilweise untereinander gekoppelt sind und zumindest teilweise untereinander kommunizieren. Jede der Leuchten realisiert mindestens die Betriebsmodi "Leuchte ist aus", "Leuchte ist mit einer Grundbeleuchtung an" und "Leuchte ist mit maximal vorgegebener Beleuchtungsstärke an", wobei der Betriebsmodus "Leuchte ist mit einer Grundbeleuchtung an" in Bezug auf die Helligkeit zwischen dem Betriebsmodus "Leuchte ist aus" und "Leuchte ist mit maximal vorgegebener Beleuchtungstärke an" liegt. Wenn beispielsweise durch Einnehmen eines Arbeitsplatzes eine Leuchte in den Betriebsmodus "Arbeitsniveau" wechselt, in dem die Leuchte mit maximal vorgegebener Beleuchtungsstärke an ist, wechselt eine unmittelbar in Nachbarschaft angeordnete, erste andere Leuchte in den Modus "Leuchte ist in einer Grundbeleuchtung an". Zur gleichen Zeit verbleibt mindestens eine zweite der anderen Leuchten in ihrem Betriebsmodus "Aus", welche z.B. von der auf Arbeitsniveau leuchtenden Leuchte weit entfernt ist. Der Nachteil dieser Beleuchtungseinrichtung besteht darin, dass diese starr lediglich benachbarte Leuchten auf eine reduzierte Beleuchtungsstärke schaltet, wenn an einer Leuchte eine Aktivität verzeichnet wird.

Aus den Druckschriften CH 705 688 A1 und EP 2 587 895 A1 ist ein Steuerungssystem für eine Vielzahl mobiler Leuchten bekannt, bei dem jede Leuchte mit einem Kommunikationsmodul aufweisend eine Sende- und Empfangseinrichtung versehen ist. Die Sende- und Empfangseinrichtung enthält einen optischen Sender und einen optischen Empfänger basierend auf sichtbarer oder unsichtbarer Lichtübertragung sowie einen Ultraschallsender und einen Ultraschallempfänger. Beim Einschalten der Leuchte sendet diese sowohl ein optisches Signal als auch einen Ultraschallimpuls aus, welche alle anderen Leuchten des Systems empfangen. Wegen des Unterschieds zwischen Licht- und Schallgeschwindigkeit werden die Signale mit einer zeitlichen Verzögerung registriert, die von der Distanz der einzelnen Leuchte von der sendenden Leuchte abhängt. Diese zeitliche Verzögerung wird in eine Distanzinformation umgesetzt, so dass die Entfernung der Leuchten des Systems bekannt ist. Die Leuchten schalten sich mit einer von der ermittelten Entfernung abhängigen Helligkeit und Beleuchtungsart ein. Das bekannte Steuerungssystem ist jedoch auf die Reichweite des optischen Signals beschränkt, das heißt auf den jeweiligen Raum eines Gebäudes, in dem die Leuchten angeordnet sind. Zudem ist das System wenig variabel hinsichtlich der Integration weiterer Leuchten, die zum Beispiel keinen Ultraschallsender beziehungsweise -empfänger aufweisen.

Aus der Druckschrift WO 2009/003279 A1 ist ein Beleuchtungssystem mit einer Vielzahl von Beleuchtungselementen bekannt, wobei jedes Leuchtelement mit einem Bewegungssensor verbunden ist, um die Anwesenheit eines zu beleuchtenden Nutzers zu erkennen. Es wird weiter beschrieben, dass ein GPS-Empfänger Bestandteil jeder Leuchte ist und dass dieser GPS-Empfänger Ortsinformationen ermittelt. Dann, wenn die Anwesenheit eines Nutzers im Bereich eines Leuchtelements detektiert wird, werden die GPS-Koordinaten, die zu diesem Zeitpunkt für das Leuchtelement durch den GPS-Empfänger ermittelt wurden, an andere Leuchtelemente weitergegeben. Diese anderen Leuchtelemente berechnen aus den übermittelten GPS-Koordinaten und aus ihren eigenen aktuellen GPS-Koordinaten den Abstand von dem Leuchtelement. Basierend auf diesem Abstand wird die Beleuchtung aktiviert.

Aus der Druckschrift WO 2014/009422 A1 ist ein Beleuchtungssystem bekannt, bei dem zur Steuerung der Beleuchtung Abstände zwischen Leuchten mittels Ultraschall ermittelt werden. Hierfür ist jede Leuchte derart ausgestaltet, dass sie Ultraschallsignale in unterschiedliche Richtungen aussenden und aus unterschiedlichen Richtungen empfangen kann.

Eine Beleuchtungssteuerung basierend auf einer Zuordnung von Beleuchtungseinheiten zu einer Gruppen-ID wird in der Druckschrift WO 2011/053132 A2 beschrieben.

Die Aufgabe der vorliegenden Erfindung besteht daher darin, ein Beleuchtungssystem mit einer Vielzahl von Leuchten zu schaffen, welches noch variabler hinsichtlich der Anordnung der Leuchten und einfacher zu bedienen ist als die bekannten Systeme sowie insbesondere in einer erweiterten Bürosituation mit Flur, vielen Räumen, einem Empfangsbereich und mit mehreren Etagen sinnvoll eingesetzt werden kann. Zudem soll die nachträgliche Integration beziehungsweise Umgestaltung der Anordnung von Leuchten einfach realisiert werden können.

Die obige Aufgabe wird gelöst durch ein Beleuchtungssystem, bei dem das Kommunikationsmodul über einen Funkkanal arbeitet und bei dem das Leuchtensteuerungsmodul die Helligkeit und/oder die Farbe der jeweiligen Leuchte separat abhängig von den Signalen der jeweils anderen Leuchten über den Funkkanal und von der Position der Leuchten in einem zweidimensionalen Koordinatensystem steuert. Ein solches Verhalten der Leuchten wird auch als Schwarmfunktion bezeichnet. Hierfür wird jeder Leuchte eine Positionsangabe in Form einer X-Koordinate und einer Y-Koordinate in dem zweidimensionalen Koordinatensystem zugeordnet. Diese Koordinaten können zum Beispiel während der Installation des Beleuchtungssystems jeder Leuchte einzeln manuell beispielsweise mittels einer Fernbedienung oder mittels eines Tasters zugeordnet werden. Alternativ kann die Zuordnung der Koordinaten auch automatisch erfolgen, was weiter unten ausführlicher erläutert wird.

Das erfindungsgemäße Leuchtensystem ist für das kombinierte Betreiben beliebiger Leuchten, beispielsweise Stehleuchten, Tischleuchten, Pendelleuchten, Anbauleuchten oder Wandleuchten geeignet.

Das oben angegebene Beleuchtungssystem hat den Vorteil, dass es durch die Kommunikation über Funk nicht nur für große Raumsituationen geeignet ist, sondern auch für einen abgeschlossen Bürobereich, bei dem zum Beispiel in angrenzenden Flurbereichen noch solange eine Beleuchtung gewährleistet sein soll, wie in den angrenzenden Räumen gearbeitet wird. Durch die koordinatenbasierte Zuordnung der Leuchten können beliebig viele, beliebig angeordnete Leuchten miteinander kommunizieren, wobei im Bedarfsfall jedoch nur eine bestimmte, durch die Beleuchtungssteuerung vorgegebene Anzahl von Leuchten in relevanten Bereichen eingeschaltet wird. Hierbei besteht die Möglichkeit, mehrere unterschiedliche Farb- und/oder Helligkeitsstufen für den Beleuchtungsbetrieb vorzugeben beziehungsweise einzustellen. Dadurch ist es zum Beispiel möglich, Leuchten in besonders prägnanten Bereichen (Eingangsbereiche, Notausgänge, Sozialbereiche) solange in einem Zustand "Licht an" zu belassen, bis der letzte Mitarbeiter das Büro verlässt. Weiter kann eine spätere Integration einer zusätzlichen Leuchte in das System einfach dadurch erreicht werden, dass dieser ihre jeweilige Koordinate zugeordnet wird. Da die bisher im System vorhandenen Leuchten sich ihre Koordinaten "merken" ist hinsichtlich dieser Leuchten bei der Integration keine Veränderung von Parametern durchzuführen, solange sie an ihrem alten Standort verbleiben und auch hinsichtlich ihrer Helligkeitsstufen unverändert weiterarbeiten sollen.

Das Leuchtensteuerungsmodul des erfindungsgemäßen Beleuchtungssystems dient zur Ansteuerung mindestens eines elektronischen Vorschaltgeräts der Leuchte, welches mit einem Leuchtmittel, beispielsweise einer LED-Leiterplatte oder einer Leuchtstoffröhre verbunden ist. Das Leuchtensteuerungsmodul verarbeitet die von dem Bewegungsmeldemodul und dem Kommunikationsmodul empfangenen Signale und bewirkt das An- und Ausschalten des Leuchtmittels bzw. die Einstellung der Helligkeit und ggf. auch der Farbe des Leuchtmittels im angeschalteten Zustand. Vorzugsweise verfügt das Leuchtensteuerungsmodul über ein eigenes Netzteil, welches besonders bevorzugt mit einem Primärschaltregler vesehen ist. In einer weiteren bevorzugten Ausführungsform verfügt das Leuchtensteuerungsmodul über ein Relais, welches das elektronische Vorschaltgerät im Standby von der Netzspannung trennt, so dass der Gesamtenergieverbrauch der Leuchte im Standby unter 0,5 W liegt. Das Relais kann mit einem vorlaufenden Wolfram-Kontakt ausgerüstet sein, so dass es den Einschaltstromstoß des elektronischen Vorschaltgeräts ertragen kann.

Es ist weiter bevorzugt, dass die Ansteuerung des mindestens einen elektronischen Vorschaltgeräts innerhalb der Leuchte über ein DALI-Netzwerk realisiert ist. Hierbei erfolgt die Spannungsversorgung über das integrierte Netzteil.

Erfindungsgemäß beinhaltet das Bewegungsmeldemodul einen Bewegungsmelder, vorzugsweise mit hochwertigem PIR (Passive Infrarot Receiver), insbesondere einem Quad-PIR-Sensor. Die Linse des Bewegungsmelders ist vorzugsweise klein und optisch ansprechend gestaltet. Weiter verfügt das Bewegungsmeldemodul in einem bevorzugten Ausführungsbeispiel über mindestens ein Anzeigemittel, beispielsweise mindestens eine LED, z.B. eine Dual Color LED in den Farben rot/grün, um der bedienenden Person eine Rückmeldung zum Betriebszustand des Bewegungsmelders geben zu können.

Das Kommunikationsmodul beinhaltet einen Funksender und einen Empfänger für Funksignale zur Kommunikation der Leuchten untereinander, besonders bevorzugt für das SRD 868 MHz-Band, durch welches eine Reichweite von ca. 50 m im offenen Gelände/Raum realisiert werden kann. Für die Funkübertragung wird bevorzugt ein proprietäres Funkmodul und ein proprietäres Übertragungsprotokoll verwendet. Vorzugsweise ist die Funkantenne im/am Kommunikationsmodul direkt angebracht. Alternativ kann eine externe Funkantenne angeschlossen sein.

Das Leuchtensteuerungsmodul, das Bewegungsmeldemodul und/oder das Kommunikationsmodul können entweder in die Leuchte integriert oder als separate Bauteile ausgeführt sein, welche nachträglich an der Leuchte angebracht und mit den Bauteilen der Leuchte verbunden werden können. Hierdurch ist eine Nachrüstung bereits vorhandener Leuchten möglich.

In einem bevorzugten Ausführungsbeispiel weist jede Leuchte zusätzlich einen Helligkeitssensor auf, der mit dem Leuchtensteuerungsmodul verbunden ist, wobei das Leuchtensteuerungsmodul die Helligkeit der jeweiligen Leuchte zusätzlich abhängig von der durch den Helligkeitssensor ermittelten Umgebungshelligkeit steuert. Dadurch berücksichtigt das erfindungsgemäße System zusätzlich das vorhandene Umgebungslicht. Bei ausreichendem Umgebungslicht schalten die Leuchten nicht ein, wenn ein Lichtbedarf besteht, so wird lediglich die zusätzlich zum Umgebungslicht benötigte Helligkeit durch die Leuchte bereitgestellt. Hierdurch kann insgesamt auch eine Energieeinsparung erreicht werden.

Es ist weiter von Vorteil, wenn das Leuchtensteuerungsmodul zur Speicherung eines ersten vorbestimmten Helligkeitswerts mit einem zugehörigen ersten Radius eines Erfassungsbereichs und mindestens eines zweiten vorbestimmten Helligkeitswert mit einem zugehörigen zweiten Radius eines Erfassungsbereichs eingerichtet ist, wobei das Leuchtensteuerungsmodul die Helligkeit der Leuchte abhängig von dem Vergleich des Abstands der jeweiligen Leuchte von einer anderen Leuchte, bei der eine Aktivität detektiert wurde, mit dem ersten Radius und mit dem zweiten Radius derart einstellt, dass in dem zu beleuchtenden Bereich der erste Helligkeitswert oder der zweite Helligkeitswert erreicht wird.

Das erfindungsgemäße Beleuchtungssystem bietet daher die Abstufung der Helligkeit in mindestens zwei Stufen durch einen vorgegebenen ersten Helligkeitswert und mindestens einen zweiten Helligkeitswert. Die Leuchte, an der durch das Bewegungsmeldemodul eine Aktivität detektiert wurde, wird als Masterleuchte bezeichnet. Das Leuchtensteuerungsmodul der jeweiligen Leuchte steuert deren Helligkeit derart, dass, wenn die Leuchte sich innerhalb eines Abstands zu einer sogenannten Masterleuchte befindet, der kleiner ist als der erste Radius, die Gesamthelligkeit an dem zu beleuchtenden Bereich dem ersten vorbestimmten Helligkeitswert entspricht. Dann, wenn sich die Leuchte in einem Abstand von der Masterleuchte befindet, der kleiner ist als der zweite Radius, jedoch größer als der erste Radius, wird die Gesamthelligkeit an dem zu beleuchtenden Bereich auf den zweiten vorbestimmten Helligkeitswert eingestellt. Hierbei kann, wie oben dargestellt, die Umgebungshelligkeit berücksichtigt werden. Der Abstand der Leuchten zueinander wird erfindungsgemäß aus den bekannten X- und Y-Koordinaten der Leuchten berechnet.

Zusätzlich kann zu dem ersten vorbestimmten Helligkeitswert und/oder dem mindestens einen zweiten vorbestimmten Helligkeitswert angebbar sein, ob die jeweilige Grundhelligkeit über den Direktanteil des Lichts der Leuchte und/oder den Indirektanteil des Lichts in der jeweiligen Leuchte erzeugt wird. Hierbei beinhaltet der Direktanteil des Lichts der jeweiligen Leuchte den Anteil des von der Leuchte ausgesendeten Lichts, der direkt auf den zu beleuchtenden Bereich fällt. Der Indirektanteil ist der Anteil des Lichts, welcher von der Leuchte erzeugt wird und, bevor er auf den zu beleuchtenden Bereich trifft, an einer Wand oder dergleichen reflektiert wird, das heißt indirekt zu der zu beleuchtenden Stelle (z.B. zu einem Arbeitsplatz) gelangt.

Wenn sowohl der Direktanteil des Lichts als auch der Indirektanteil des Lichts einbezogen werden sollen, um eine Beleuchtungsaufgabe zu erfüllen, kann vorzugsweise zudem ein Verhältnis angegeben werden, das beschreibt, mit welchem Anteil der Direktanteil des Lichts und mit welchem Anteil der Indirektanteil des von der jeweiligen Leuchte ausgesendeten Lichts die Beleuchtung realisieren sollen.

In einem alternativen Ausführungsbeispiel kann die Helligkeit der Leuchte derart gesteuert werden, dass sich die Helligkeit in dem zu beleuchtenden Bereich als ein Wert ergibt, der zwischen zwei vorgegebenen Helligkeitswerten liegt, wobei die Helligkeit der jeweiligen Leuchte direkt von der Entfernung von der Masterleuchte abhängt. Hierdurch wird ein linearer Helligkeitsverlauf in einem vorgegebenen Bereich um die Masterleuchte erzeugt. Beispielsweise leuchten Leuchten, die nah an der Masterleuchte angeordnet sind, heller und weiter entferntere Leuchten dunkler.

In einem weiteren bevorzugten Ausführungsbeispiel ist jede Leuchte mindestens einer Gruppe zugeordnet, wobei das Leuchtensteuerungsmodul die Helligkeit und/oder die Farbe der jeweiligen Leuchte zusätzlich abhängig von der Zugehörigkeit der jeweiligen Leuchte zu einer Gruppe steuert. Durch die Gruppenzugehörigkeit, die durch einen entsprechenden Gruppenparameter im Leuchtensteuerungsmodul gespeichert wird, kann die Einstellung der Helligkeit an vorgegebene Bedingungen geknüpft werden. Beispielsweise kann eine Gruppe mit dem Gruppenparameter 0 definiert werden, welche bei mindestens einer mit dem Bewegungsmeldermodul verzeichneten Aktivität im gesamten Bereich des Systems oder in mehreren Untergruppen von Leuchten (z.B. alle Gruppen einer Etage eines Gebäudes) stets mit einer geringen Helligkeit leuchtet. Eine derartige Leuchtengruppe ist insbesondere für Flur- und Empfangsbereiche sowie Notausgänge geeignet. Ferner können die Leuchten ganzer Räume oder Leuchtenreihen einer Gruppe zugeordnet und dadurch mit zusätzlichen vorgegebenen Bedingungen gesteuert werden. Um die Gruppenzugehörigkeit der Leuchte, an der die Aktivität verzeichnet wurde, mit der Gruppe der Leuchte, deren Helligkeit gesteuert werden soll, zu vergleichen, wird auch die Gruppenangabe der Leuchte mit Aktivität zu den anderen Leuchten übertragen.

Durch die Gruppierung ist es z.B. möglich, eine Beleuchtung lediglich auf die direkte Umgebung einer Aktivität in einem einzigen Raum zu beziehen. Hierzu werden die Leuchten einmalig raumbezogen adressiert und reagieren daher automatisch nur auf Aktivität in dem jeweiligen Raum. Hierdurch können beträchtliche Energieeinsparungen erreicht werden.

Eine Leuchte des erfindungsgemäßen Systems kann auch zwei oder mehr Gruppen angehören, z.B. einer ersten Gruppe, die die Etage angibt, auf der sich die jeweilige Leuchte befindet, und einer zweiten Gruppe, welche den jeweiligen Raum der Leuchte beinhaltet. In diesem Fall ist der in dem Leuchtensteuerungsmodul gespeicherte Gruppenparameter mehrdimensional.

Das erfindungsgemäße Beleuchtungssystem beeinflusst gerade in offenen Bürosituationen die Arbeitsatmosphäre in den lichtunterstützten Zeiten positiv. Kleine Lichtinseln in ansonsten dunkler Umgebung werden vermieden. Stattdessen nimmt die Helligkeit des Lichts um den Arbeitsplatz herum erst allmählich ab. Die arbeitsplatzbezogenen Lösungen erhöhen den Komfort und sparen dabei Energie. Weiter werden starke Kontraständerungen vermieden, was eine Ermüdung bei einer Bildschirmtätigkeit reduziert.

In einem besonders bevorzugten Ausführungsbeispiel ist die Position einer Leuchte in dem zweidimensionalen Koordinatensystem, das heißt ihre X- und Y-Koordinate, automatisch mittels eines an der Leuchte angeordneten Ultraschallmoduls und des Kommunikationsmoduls bestimmbar. In diesem Ausführungsbeispiel wird insbesondere bei entsprechender Veranlassung durch einen Benutzer, beispielsweise bei Installation oder Konfiguration des Beleuchtungssystems, eine Vermessung aller zum System gehörender Leuchten, d.h. eine Vermessung der Leuchtenabstände, durch den Laufzeitunterschied zwischen dem Funksignal und dem Ultraschallsignal durchgeführt. Anhand der vermessenen Abstände bestimmt dann das System ausgehend von einer Masterleuchte die Koordinaten (XY) zu jeder Leuchte und ordnet der Leuchte diese zu und veranlasst eine Speicherung dieser Daten in dem Leuchtensteuerungsmodul. Hierbei kann jede Leuchte des Systems mit Ultraschallmodul als Masterleuchte fungieren. Beispielsweise wird die Leuchte, welche zuerst von dem jeweiligen Benutzer angeschaltet wurde, durch das System zur Masterleuchte bestimmt. Durch die automatische Zuordnung der Koordinaten zu den Leuchten wird eine sogenannte Plug + Play-Lösung erreicht, bei dem das System in einem Auslieferungsmodus automatisch einstellbar ist. In diesem Modus können zusätzlich automatisch Gruppen gebildet werden, zum Beispiel die Leuchten in einem ersten Raum einer ersten Gruppe und die Leuchten in einem zweiten Raum einer zweiten Gruppe zugeordnet werden. Zudem ist von Vorteil, dass eine Leuchte, die in den Bereich einer bestimmten Gruppe (zum Beispiel in einen Raum eines Gebäudes) verschoben wird, sich automatisch in das System einmisst und sich ohne zusätzlichen Programmieraufwand der Gruppe zuordnet sowie ihre zugehörigen X- beziehungsweise Y-Koordinaten bestimmt.

Alternativ können Leuchten, die nicht über ein Ultraschallmodul verfügen, manuell in das System integriert werden, in dem ihnen ein entsprechende X- und Y-Koordinate händisch, z.B. über ein unten beschriebenes Tastenmodul, zugeordnet wird.

Weiter ist es von Vorteil, wenn die Gruppen auch raumübergreifend eingerichtet werden, so dass für eine sich in einem Gebäude bewegende Person die Licht-übergänge zwischen verschiedenen Bereichen langsam und für das Auge angenehm gestaltet werden können.

Es ist ferner vorteilhaft, wenn das Leuchtensteuerungsmodul eine für die jeweilige Gruppe und/oder Leuchte individuelle Nachlaufzeit oder Haltezeit speichert, welche nach Feststellung der Beendigung einer Aktivität an der jeweiligen Leuchte oder der zugehörigen Masterleuchte abgewartet wird, bevor die jeweilige Leuchte abgeschaltet wird.

In einem weiteren Ausführungsbeispiel weist mindestens eine Leuchte jeweils ein Tastenmodul auf, das mit dem Leuchtensteuerungsmodul verbunden ist, wobei mittels des Tastenmoduls die jeweilige Leuchte manuell ein- und ausschaltbar sowie dimmbar ist. Das Tastenmodul, das z.B. einen an einer Raumwand angebrachten mechanischen Schalter oder Taster aufweist, kann manuell betätigt werden.

In einem weiteren Ausführungsbeispiel weist mindestens eine Leuchte ein Infrarotmodul auf, so dass die X- und Y-Koordinaten sowie weitere Parameter des Leuchtensteuerungsmoduls (z.B. Gruppenparameter) sowie ein Ein- und Ausschaltsignal beziehungsweise Dimmen der jeweiligen Leuchte mittels einer Fernbedienung steuerbar sind, wobei die Fernbedienung als IR-Fernbedienung gestaltet ist und über das Infrarotmodul mit dem Leuchtensteuerungsmodul kommuniziert.

Die Fernbedienung kann beispielsweise in Form einer Card-Fernbedienung ausgebildet sein und beispielsweise mehr als 10, vorzugsweise mehr als 20 Tasten aufweisen. Die Fernbedienung beinhaltet vorzugsweise einen Infrarot-Sender zum Aussenden von Infrarot-Signalen an das Infrarotmodul.

Das Infrarotmodul besitzt vorzugsweise einen Infrarot-Empfänger zur Aufnahme von Infrarot-Signalen der Fernbedienung sowie in einem besonders bevorzugten Ausführungsbeispiel eine Dual-Color-LED oder ein anderes Anzeigemittel zur optischen Ausgabe einer Rückmeldung.

Alternativ kann das Einrichten des Beleuchtungssystems durch ein Konfigurationstool erfolgen, welches in Verbindung mit einem PC arbeitet.

Die obige Aufgabe wird ferner gelöst durch ein Verfahren mit den Merkmalen des Anspruchs 10. Das erfindungsgemäße Verfahren dient insbesondere zur Steuerung einer Vielzahl von Leuchten, wobei jede Leuchte ein Leuchtensteuerungsmodul, ein Bewegungsmeldermodul und ein Kommunikationsmodul aufweist, wobei das Leuchtensteuerungsmodul mit dem Bewegungsmeldemodul und dem Kommunikationsmodul verbunden ist und wobei das Kommunikationsmodul über einen Funkkanal arbeitet, wobei durch das Leuchtensteuerungsmodul jeder Leuchte nach dem Empfang eines Funksignals einer anderen Leuchte, das eine Aktivität an dieser anderen Leuchte vermeldet, die Helligkeit und/oder die Farbe der jeweiligen Leuchte abhängig von ihrer Position und der Position der anderen, das Funksignal aussendenden Leuchte in einem zweidimensionalen Koordinatensystem gesteuert wird. Das erfindungsgemäße Verfahren weist die oben zu dem Beleuchtungssystem diskutierten Vorteile und analoge Ausführungsbeispiele auf.

Es wird weiter ein System aus einem Leuchtensteuerungsmodul, einem Bewegungsmeldermodul und einem Kommunikationsmodul für eine Leuchte beschrieben, wobei das Leuchtensteuerungsmodul mit dem Bewegungsmeldermodul und dem Kommunikationsmodul verbunden ist. Das System zeichnet sich dadurch aus, dass das Kommunikationsmodul über einen Funkkanal arbeitet und dass durch das Leuchtensteuerungsmodul die Helligkeit und/oder die Farbe der jeweiligen Leuchte separat abhängig von den Signalen der Kommunikationsmodule der jeweils anderen Leuchten über den Funkkanal und von der Position der Leuchten in einem zweidimensionalen Koordinatensystem steuerbar ist. Das System weist die oben zu dem Beleuchtungssystem diskutierten Vorteile auf. Weiter kann das System den oben beschriebenen Helligkeitssensor, das Ultraschallmodul, Tastenmodul und/oder das oben diskutierte Infrarot-Modul aufweisen. Weiter kann das Leuchtensteuerungsmodul die oben beschriebenen Ausgestaltungen beinhalten.

Das Leuchtensteuerungsmodul, das Bewegungsmeldermodul und das Kommunikationsmodul können bei dem erfindungsgemäßen System gemeinsam in einem einzigen Bauteil oder in verschiedenen Bauteilen verwirklicht sein.

Weitere Merkmale, Vorteile und Anwendungsmöglichkeiten der Erfindung ergeben sich auch aus der nachfolgenden Beschreibung eines Ausführungsbeispiels eines erfindungsgemäßen Beleuchtungssystems und den Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezüge.

Es zeigen schematisch:
- Figur 1: die Anordnung der Leuchten eines Ausführungsbeispiels des erfindungsgemäßen Beleuchtungssystems in einem Gebäude mit einem Flur und fünf Räumen in einer Ansicht von oben,
- Figur 2: das Ausführungsbeispiel gemäß Figur 1, ebenfalls in einer Ansicht von oben,
- Figuren 3 bis 6: unterschiedliche Leuchtzustände des erfindungsgemäßen Beleuchtungssystems gemäß Figur 1 in einer Ansicht von oben,
- Figur 7: den Aufbau einer Leuchte und
- Figur 8: eine Fernbedienung für das erfindungsgemäße System in einer Ansicht von oben.

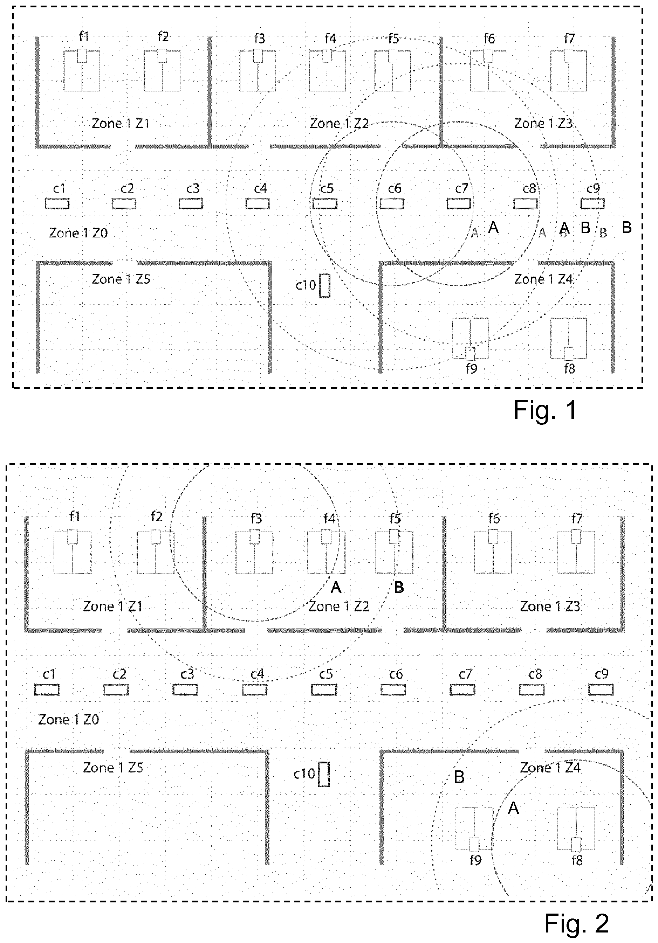

Die Figuren 1 bis 6 zeigen beispielsweise die erste Etage (Zone 1) eines Gebäudes mit fünf Räumen (Zone1,Z1; Zone1,Z2; Zone1,Z3; Zone1,Z4; Zone1,Z5) und einem dazwischen angeordneten Flur. Die in diesen Räumen und im Flur angeordneten Leuchten sind als kleine Rechtecke in die Skizze eingezeichnet. Der erste Raum Zone1,Z1 beinhaltet vier Arbeitsplätze mit jeweils einer Stehleuchte f1, f2. Die Leuchtengruppe f1, f2 wird als Zone 1 Z1 bezeichnet. In dem Raum Zone1,Z2 befinden sich sechs Arbeitsplätze mit drei Stehleuchten f3, f4, f5. Die Stehleuchten f6, f7 sind in dem Raum mit der Nummer Zone1,Z3 angeordnet.

In dem Zimmer Zone1,Z5 ist kein Arbeitsplatz und auch keine Leuchte vorhanden. Das Zimmer unten rechts, deren Stehleuchten f9, f8 die Gruppe Zone1,Z4 bilden, besitzt insgesamt vier Arbeitsplätze. Die Leuchten c1 bis c10, welche die Gruppe Zone1,Z0 bilden und beispielsweise als Deckenleuchten gestaltet sind, beleuchten den zwischen den Räumen angeordneten Flurbereich.

Jeder Leuchte wurde manuell oder automatisch während der Konfiguration des Beleuchtungssystems eine X- und Y-Koordinate zugeordnet. Die Zuordnung zu dem Koordinatensystem ist durch das in den Figuren 1 bis 6 dargestellte quadratische Raster veranschaulicht.

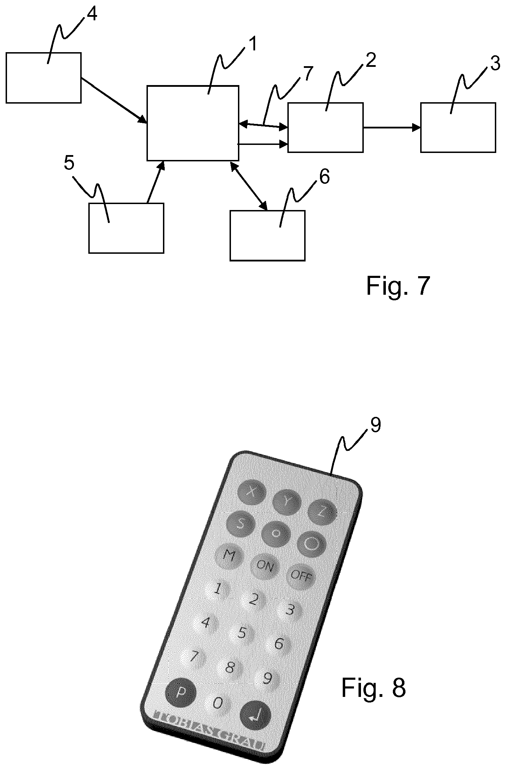

Jede Leuchte weist, wie in Figur 7 dargestellt, ein Leuchtensteuerungsmodul 1 auf, welches das zentrale Steuerungsmodul für den Betrieb der Leuchte darstellt. Es verfügt über ein eigenes Netzteil, welches mit einem Primärschaltregler versehen ist. Das Netzteil ist ausgelegt für eine Primärspannung von 100 V bis 230 V / 50 Hz bis 60 Hz AC. Das Netzteil versorgt alle Einzelkomponenten und Erweiterungsmodule des Systems. Durch ein Relais kann ein elektronisches Vorschaltgerät 2, mit dem das Leuchtensteuerungsmodul 1 verbunden ist, von der Netzspannung getrennt werden, so dass der Gesamtenergieverbrauch der Leuchte im Standby unter 0,5 W liegt.

Das elektronische Vorschaltgerät 2 ist mit einem Leuchtmittel 3, z.B. einer LED-Leiterplatte oder einer Leuchtstoffröhre, verbunden.

Weiter ist ein Tastenmodul 4 vorgesehen, welches das Ein- und Ausschalten sowie Dimmen der Leuchte erlaubt. Ferner ist die Eingabe von Parametern wie die Arbeitshelligkeit sowie die Grundhelligkeit eines ersten oder zweiten Erfassungsbereichs A, B möglich. Hierfür ist das Tastenmodul 4 mit dem Leuchtensteuerungsmodul 1 verbunden.

Das Leuchtensteuerungsmodul 1 ist weiter verbunden mit einem Bewegungsmeldemodul 5, welches dem Leuchtensteuerungsmodul 1 Signale übermittelt, wenn durch den Bewegungsmelder, vorzugsweise einem Quad-PIR-Sensor, des Bewegungsmeldemoduls 5 Aktivität im Bereich der jeweiligen Leuchte verzeichnet wird. Das Bewegungsmeldemodul 5 kann zudem einen Helligkeitssensor beinhalten, welcher die Helligkeit der Leuchtenumgebung misst und an das Leuchtensteuerungsmodul 1 weitergibt.

Alternativ oder zusätzlich zum Bewegungsmeldemodul 5 kann ein nicht dargestelltes IR-Empfängermodul vorgesehen sein, das mit einer in Figur 8 dargestellten IR-Fernbedienung 9 kommuniziert. Über die Fernbedienung 9 und das IR-Empfängermodul kann die Leuchte ein- und ausgeschaltet sowie gedimmt werden. Zudem können z.B. während der Konfiguration des Systems Parameter für die jeweilige Leuchte eingegeben werden. Hierfür ist das IR-Empfängermodul mit dem Leuchtensteuerungsmodul 1 verbunden.

Zudem besitzt jede Leuchte ein Funkmodul 6 mit einem Funksender und - empfänger, welches mit dem Leuchtensteuerungsmodul 1 bidirektional kommuniziert und zur Kommunikation der Leuchten untereinander dient. Durch das Funkmodul 6 empfangene Signale werden an das Leuchtensteuerungsmodul 1 weitergegeben. Zudem bewirkt das Leuchtensteuerungsmodul 1 das Versenden von Funksignalen durch das Funkmodul 6. Das Funkmodul 6 arbeitet z.B. auf dem 886,3 MHz SRD-Band.

Die Ansteuerung des elektronischen Vorschaltgeräts 2 durch das Leuchtensteuerungsmodul 1 kann innerhalb der Leuchte über ein DALI-Netzwerk 7 erfolgen (DALI = Digital Addressable Lighting Interface), wobei die DALI-Schnittstelle digital und seriell arbeitet. Alternativ kann ein nicht dargestelltes 1 - 10 V Schnittstellenmodul verwendet werden, welches über eine 1 - 10 V Analogschnittstelle an das elektronische Vorschaltgerät 2 angebunden ist.

Weiter kann ein nicht dargestelltes Ultraschallmodul mit einem Ultraschallsender und -empfänger vorgesehen sein, das zur oben erläuterten automatischen Zuordnung der X-,Y-Koordinate dient. Das Ultraschallmodul ist ebenfalls mit dem Leuchtensteuerungsmodul 1 verbunden.

Jede Leuchte kann bei einer sogenannten Arbeitshelligkeit betrieben werden, welche durch das Leuchtensteuerungsmodul 1 eingestellt wird, wenn an der jeweiligen Leuchte durch ein entsprechendes Sensorsignal des Bewegungsmelders des Bewegungsmeldemodul 5 eine Aktivität detektiert wird. Die Arbeitshelligkeit kann während der Konfiguration des Leuchtensystems eingestellt werden und beispielsweise zwischen 80% und 100% der maximalen Helligkeit der jeweiligen Leuchte liegen.

Wie in Figur 1 anhand der um die Flurleuchten c6 und c7 gezeichneten Kreise A und B angedeutet wird, besitzt jede der Leuchten f1 bis f9 und c1 bis c10 einen ersten kreisförmigen Erfassungsbereich (kleiner Kreis A), dessen erster Radius im Leuchtensteuerungsmodul 1 jeder Leuchte gespeichert ist, wobei dann, wenn eine Aktivität innerhalb des ersten Erfassungsbereichs A festgestellt wird, an der Leuchte eine Grundhelligkeit eingestellt wird, welche z.B. 70% der Arbeitshelligkeit beträgt. Beim Vorliegen einer Aktivität innerhalb des zweiten Erfassungsbereichs (großer Kreis B) einer Leuchte, jedoch außerhalb des ersten Erfassungsbereichs A, wird durch das Leuchtensteuerungsmodul 1 an der zugehörigen Leuchte eine Grundhelligkeit eingestellt, welche z.B. bei 40% der Arbeitshelligkeit liegt. Entsprechend ist für jede Leuchte in dem jeweiligen Leuchtensteuerungsmodul 1 auch der Radius und die zugehörige Grundhelligkeit des zweiten Erfassungsbereichs B gespeichert. Die Helligkeitswerte für den ersten Erfassungsbereich und den zweiten Erfassungsbereich B sowie deren Radien können individuell für jede Leuchte oder für Gruppen von Leuchten voreingestellt werden, z.B. durch Eingabe mittels einer Fernbedienung über das Infrarot-Modul.

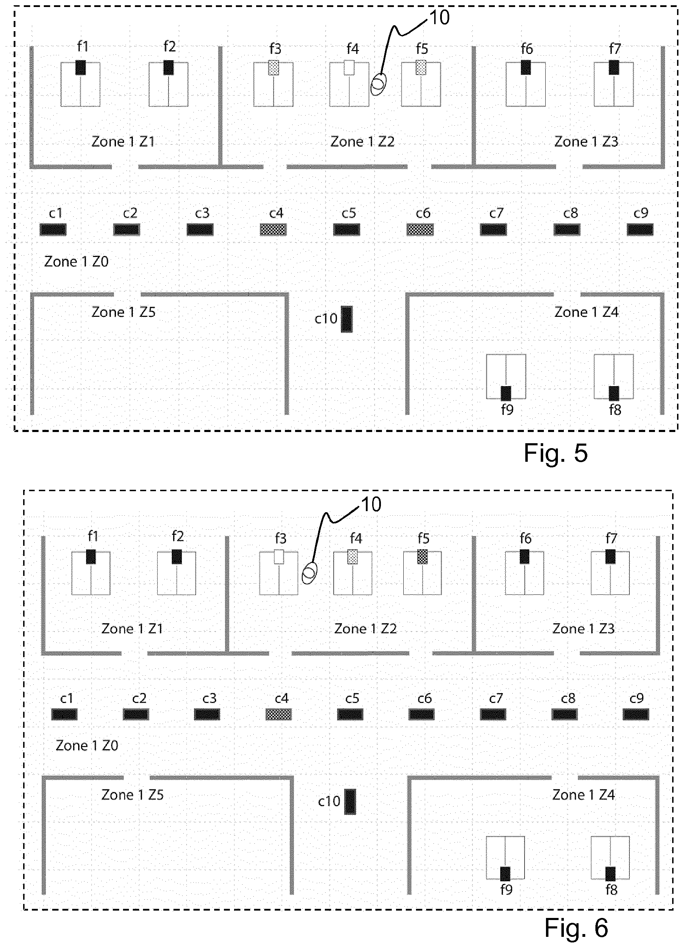

Bei dem Ausführungsbeispiel gemäß Figuren 1 bis 6 sind z.B. die Radien der zweiten Erfassungsbereiche B derart gestaltet, dass die zweiten Erfassungsbereiche B der Leuchten c1, c3, c5, c7 und c9 einen kleineren Radius aufweisen (beispielhaft siehe Kreis B um die Leuchte c7) als die zweiten Erfassungsbereiche B der Leuchten c2, c4, c6 und c8 (beispielhaft siehe Kreis B um die Leuchte c6). Der zweite Erfassungsbereich der Leuchten c1, c3, c5, c7 und c9 reicht nicht bis zu den Leuchten in den Räumen, während der zweite Erfassungsbereich der Leuchten c2, c4, c6 und c8 jeweils zumindest die nächstliegenden Leuchten in den Räumen mit einschließt. Daher wirkt sich eine Aktivität der Leuchten in den Räumen auf die Flurleuchten c2, c4, c6 und c8 aus, es wird ggf. bei dem vorliegenden Beispiel 40% der Arbeitshelligkeit eingestellt. Demgegenüber liegen die Leuchten in den Räumen zu weit von den Leuchten c1, c3, c5, c7 und c9 entfernt, so dass eine Aktivität an diesen Leuchten keine Veränderung des Zustands "Aus" hervorrufen (siehe auch das unten anhand der Figuren 5 und 6 beschriebene Verhalten der Leuchten c4, c5 und c6 bei einer Aktivität in dem Raum Zone1,Z2).

Die Definition und Eingabe weiterer Helligkeitsstufen, z.B. für einen Raumreinigungsmodus, ist ebenfalls möglich.

Ob sich eine Aktivität des ersten Erfassungsbereichs A oder des zweiten Erfassungsbereichs B befindet, wird aufgrund der X-, Y-Koordinaten der Leuchten durch Bestimmung des Abstands der Position der Leuchte mit der Aktivität zu der Position der jeweiligen Leuchte berechnet.

Figur 2 zeigt beispielhaft jeweils den ersten Erfassungsbereich A und des zweiten Erfassungsbereichs B der Leuchten f3 und f8, die sich in den jeweiligen Räumen Zone1,Z2 und Zone1,Z4 befinden.

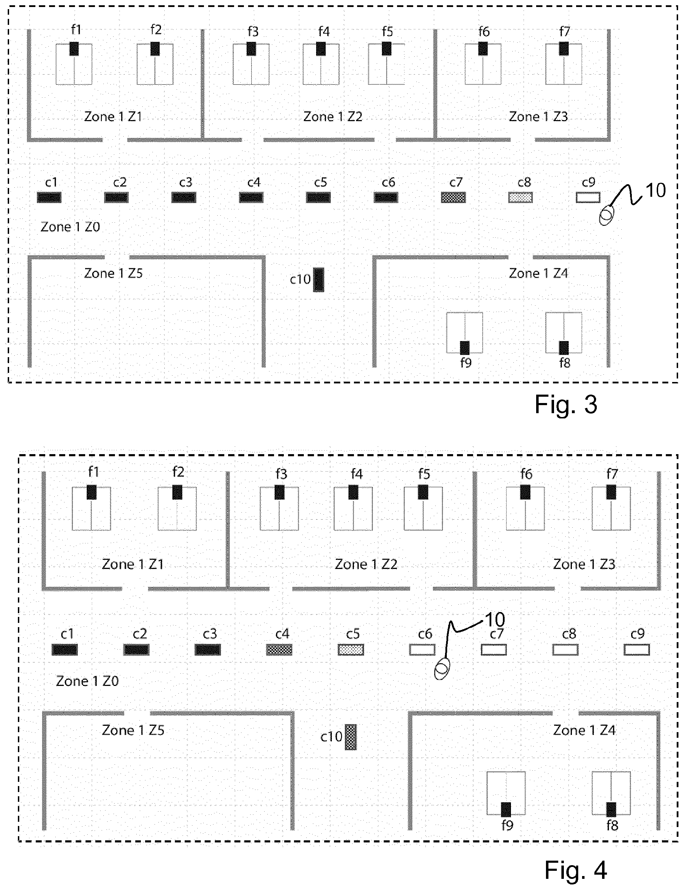

Wenn nun eine Person 10 den Flur bei der Leuchte c9 betritt, wie in Figur 3 dargestellt, so wird an dieser Leuchte mittels des Bewegungsmeldemoduls 5 eine Aktivität detektiert. Diese Leuchte schaltet dann auf ihre Arbeitshelligkeit.

Die Leuchte c9 kommuniziert nun per Funk über das Funkmodul 6 mit allen anderen Leuchten f1 bis f9, c1 bis c8 und c10 und übermittelt diesen die Nachricht, dass bei ihr eine Aktivität detektiert wurde. Die Koordinaten X, Y der Leuchte c9, an der die Aktivität festgestellt wurde, sowie deren Gruppe (Zone1,Z0) werden dabei ebenfalls übermittelt.

Abgeleitet von ihrer Raumkoordinate X, Y kann das jeweilige Leuchtensteuerungsmodul 1 der anderen Leuchten, beispielsweise der Leuchten c7 und c8 z.B. mittels bekannter Verfahren aus der Trigonometrie den Abstand der Leuchte c9 von der Leuchte c7 beziehungsweise c8 ermitteln und daraus, ob die Leuchte c9 in dem ersten Erfassungsbereich A der Leuchte c7 beziehungsweise c8, in ihrem zweiten Erfassungsbereich B, oder außerhalb dieser Erfassungsbereiche steht. Je nach Ergebnis dieses Vergleichs bewirkt das Leuchtensteuerungsmodul 1, dass die Leuchten mit einer vorgegebenen Grundhelligkeit betrieben werden.

Im vorliegenden Fall ergibt sich aus Figur 1, wobei Leuchte c8 zu c6 analoge Erfassungsbereiche aufweist, dass die Leuchte c9 im ersten Erfassungsbereich A der Leuchte c8 angeordnet ist. Entsprechend wird c8 auf eine Grundhelligkeit von 70% der Arbeitshelligkeit eingestellt. Figur 1 ist weiter zu entnehmen, dass sich die Leuchte c9 innerhalb des Kreises mit dem Radius B des zweiten Erfassungsbereichs der Leuchte c7 befindet, so dass diese auf die Grundhelligkeit mit dem Wert 40% der Arbeitshelligkeit eingestellt wird. Vor Einstellung der jeweiligen Grundhelligkeit prüft das jeweilige Leuchtensteuerungsmodul 1 zudem anhand der von der Leuchte c9 übermittelten Gruppenangabe die Zugehörigkeit der Leuchte c9 zu der Gruppe der Leuchte c8 beziehungsweise c7. Da sich die Leuchten c7, c8 und c9 in der gleichen Gruppe Zone1 und der gleichen Untergruppe Z0 befinden, werden die oben angegebenen Grundhelligkeiten auch eingestellt. Dies kann in einem Ausführungsbeispiel beispielsweise mittels einer entsprechenden Pulsweitenmodulation (PWM) erreicht werden. Die Leuchten c1 bis c6 und c10 sowie f1 bis f9 sind ausgeschaltet, da sie zu weit von der Aktivität entfernt angeordnet sind.

Grundsätzlich wird bei dem in den Figuren 1 bis 6 dargestellten Ausführungsbeispiel für die Einstellung der Helligkeit der Leuchten c1 bis c10 der Zone Z0, die sich im Flurbereich befinden, eine Aktivität von Leuchten aus den Gruppen Z1 bis Z5 berücksichtigt.

Demgegenüber wird bei der Einstellung der Helligkeit der Leuchten der Gruppen Z1 bis Z5 eine Aktivität der Leuchten f1 bis f9 nur dann berücksichtigt, wenn sie in der gleichen Gruppe, d.h. im gleichen Raum detektiert wird. Eine Aktivität der Leuchten der Gruppe Z0 wird für die Leuchten der Gruppen Z1 bis Z5 nicht berücksichtigt.

Wie in Figur 4 dargestellt wird, schalten bei einer weiteren Bewegung der Person 10 durch den Flur entlang der Leuchten c8, c7 und c6 diese Leuchten ebenfalls auf Arbeitshelligkeit. Die jeweils passierten Leuchten c9, c8 und c7 leuchten weiter auf Niveau der Arbeitshelligkeit in ihrer voreingestellten Nachlaufzeit. Da analog zu Figur 3 die Leuchte c6 im ersten Erfassungsbereich A der Leuchte c5 liegt, schaltet diese auf eine Grundhelligkeit mit 70% der Arbeitshelligkeit. Weiter liegt die Leuchte c6 im zweiten Erfassungsbereich B der Leuchten c4 und c10, so dass die Leuchten c4 und c10 auf eine Grundhelligkeit mit 40% der Arbeitshelligkeit schalten. Die Leuchten f1 bis f9 und c1 bis c3 bleiben weiter ausgeschaltet.

In der in Figur 5 dargestellten Situation, in der sich die Person 10 nun in den mittigen oberen Raum, an den Arbeitsplatz mit der Leuchte f4 bewegt hat, wird diese nun mit Arbeitshelligkeit betrieben. Da die Leuchte f4 im ersten Erfassungsbereich A der Leuchten f5 und f6 liegt und f4 zur gleichen Gruppe Z2 gehört, schalten diese auf eine Grundhelligkeit von 70% der Arbeitshelligkeit. Die Leuchte f4 liegt weiter im zweiten Erfassungsbereich B der Leuchten c4 und c6, so dass diese auf eine Grundhelligkeit von 40% der Arbeitshelligkeit schalten. Da diese Flurleuchten zur Gruppe Z0 gehören, berücksichtigen diese, wie oben ausgeführt, eine Aktivität aus der Gruppe Z2. Dies führt, wie der Figur 5 zu entnehmen ist, dazu, dass für eine Person, die im Raum Z2 arbeitet, auch die angrenzenden Bereiche des Flurs beleuchtet sind, was die Sicherheit erhöht und eine für das Auge angenehmere Beleuchtung schafft. Die Leuchten f1, f2, f6 bis f9, c1 bis c3, c5 und c7 bis c9 sind ausgeschaltet beziehungsweise wieder nach Ablauf der Nachlaufzeit aus.

Nun bewegt sich die Person 10, wie in Figur 6 dargestellt, zur Leuchte f3, welche daraufhin auf Arbeitshelligkeit schaltet. Obwohl die Leuchte f3 im zweiten Erfassungsbereich der Leuchte f2 liegt, wird diese jedoch nicht eingeschaltet, da die Leuchte f2 nicht zur Gruppe Z2, sondern zur Gruppe Z1 gehört. (Die Leuchten f1 bis f7 besitzen sämtlich eine analoge Größe der Erfassungsbereiche, wie sie in Figur 2 für die Leuchte f3 dargestellt ist.) Demgegenüber schaltet die Leuchte f4 auf eine Grundhelligkeit von 70% der Arbeitshelligkeit und die Leuchten f5 und c4 schalten auf eine Grundhelligkeit von 40% der Arbeitshelligkeit. Die Leuchten f1, f2, f6 bis f9, c1 bis c3 und c5 bis c10 sind ausgeschaltet.

Das Leuchtensteuerungsmodul 1 kann außerdem bei der Einstellung der Helligkeit weitere Steuerparameter wie eine optionale Alterungskompensation der Leuchtmittel und die mit dem Helligkeitssensor bestimmte Umgebungshelligkeit berücksichtigen. Das automatische Umschalten zwischen zwei Helligkeiten erfolgt als Dimm-Vorgang hartcodiert innerhalb von 1 Sekunde. Das Dimmen über den gesamten Wertebereich per Hand dauert hartcodiert 5 Sekunden.

Die Alterungskompensation insbesondere hinsichtlich des Ausgleichs der nachlassenden Helligkeit der LEDs kann beispielsweise derart implimentiert werden, dass bei einer neuen Leuchte die maximale Helligkeit zuerst reduziert wird, um dann über den Produktlebenszyklus nach und nach erhöht zu werden. Der Zeitraum in Stunden und die Anfangshelligkeit ist konfigurierbar. Weiterhin lässt sich die bisherige Laufzeit auch manuell einstellen, sollten beispielsweise die LED Arrays getauscht werden.

Via Fernbedienung 9 lassen sich die verschiedenen Parameter der Steuerung einstellen. Die Eingabe der Parameter erfolgt vorzugsweise passwortgeschützt. Die Konfiguration der Schwarmfunktion wird bevorzugt separat durchgeführt und hat bevorzugt ein eigenes Passwort. Eine Passworteingabe erfolgt mit P <Rechteebene> ENTER <Passwort> ENTER. Verschiedene Zugriffsrechte, die unterschiedliche Passwörter haben, werden implementiert, um den Endnutzer von den Servicetechnikern zu unterscheiden.

Zur Auswahl der Rechteebene stehen folgende Tasten zur Verfügung:
M für Modusänderung / Basiskonfiguration
S für Schwarm
X Sevice
Y Für Raumreinigungsmodus

Um nach Eingabe des Passwortes die Steuerung wieder zu sperren, und die Parameter im EEPROM zu speichern, wird einmalig P gedrückt. Dies erfolgt auch nach 5 Minuten ohne Benutzereingabe automatisch.

Nachdem die Konfiguration freigeschaltet wurde, können die Parameter mit M <ParameterlD> ENTER <Parameterwert> ENTER geändert werden. Boolesche Parameter können vereinfacht mit M <ParameterlD> ON|OFF eingegeben werden, oder alternativ mit M <ParameterlD> ENTER 1|0 ENTER. Nicht skalare Werte werden mit M <ParameterlD> ENTER <Wert1> ENTER <Wert2> ENTER eingegeben.

Die Schwarmfunktion bietet zusätzlich noch die Möglichkeit die wichtigsten Parameter via Kurztaste einzugeben. Beispiel: X <Wert für X Koordinate> ENTER.

Während der Konfiguration wird vorzugsweise ein Dual-Color-LED (rot/grün) als Rückmeldung an den Bediener verwendet. Eingaben und Fehlermeldungen können mit folgenden Blinkcodes visualisiert werden:

| | |
|---|---|
| Tastendruck empfangen | Einmaliges kurzes grünes Blinken |
| Eingabe/Passwort OK | 1 Sekunde grünes Leuchten |
| Eingabe/Passwort nicht OK | 1 Sekunde rotes Leuchten |
| Parameterindex unbekannt | 1 Sekunde rot dann 1x orange Blinken |
| Keine Zugriffsrechte | 1 Sekunde rot dann 2x orange Blinken |
| Eingegebener Wert ungültig | 1 Sekunde rot dann 3x orange Blinken |
| Basiskonfiguration aktiv | Zyklisches kurzes oranges Doppelblinken |
| Schwarmkonfiguration aktiv | Zyklisches kurzes oranges Doppelblinken |

Der PIR des Bewegungsmeldemoduls 5 beinhaltet zusammengefasst folgende funktionale Blöcke:
   - Filter um nur Signale zu erfassen, deren Frequenzspektrum der Bewegung eines Menschen durch die einzelnen Erfassungsbereiche entspricht,
   - Hüllkurvenbildung und Limiter, um schwache Signale nahe der Rauschgrenze sowie übermäßig starke Signale auszublenden,
   - Bildung eines gleitenden Mittelwertes der Signalstärke und Vergleich mit einem Schwellwert.

Der Wert für die Rausschwelle und der Schwellwert für das gemittelte Signal sind in der Konfiguration einstellbar. Wie bei Bewegungsmeldern (Präsenzmeldern) üblich, kann dann ein Kompromiss zwischen Empfindlichkeit, Zuverlässigkeit und Reaktionsgeschwindigkeit gefunden und eingestellt werden.

Der Präsenzmelder kann vier mögliche Auslösekonfigurationen realisieren:
- Deaktiviert
   Der Präsenzmelder kann die Leuchte nicht einschalten
- Aktiviert / Normal
   Der Präsenzmelder kann die Leuchte einschalten
- Retrigger
   Die Leuchte kann nur via Taster eingeschaltet werden, allerdings bleibt sie danach eingeschaltet, solange der Präsenzmelder von Zeit zu Zeit ausgelöst wird.
- Zeitlimitiert
   Wie Retrigger, allerdings kann der Präsenzmelder die Leuchte innerhalb einer bestimmten Zeit nach dem sie abschaltete erneut einschalten.

Es wird also unterschieden zwischen einem PIR Signal, das die Leuchte einschaltet, und einem, das die Haltezeit zurücksetzt, so dass die Leuchte eingeschaltet bleibt.

PIR Signale können optional unterdrückt werden, falls die gemessene Umgebungshelligkeit ausreichend hoch ist. Dadurch wird ein unnötiges Einschalten der Leuchte verhindert. Dies passiert nur, wenn der Helligkeitsregler eingeschaltet ist.

In nachfolgender Tabelle sind die möglichen Konfigurationen und die zusätzlich nötigen Bedingungen zusammengefasst.

| **Konfiguration** | | **Auslösebedingung für ...** | |
|---|---|---|---|
| **PIR Modus** | **Helligkeitsregler** | **initialen Trigger** | **re-Trigger** |
| Deaktiviert | Ein | Nie | Nie |
| Aktiviert | Ein | Wenn dunkel | Immer |
| Nur Re-Trigger | Ein | Nie | Immer |
| Zeitlimitiert | Ein | Wenn dunkel und Zeit < Zeitlimit | Immer |
| Deaktiviert | Aus | Nie | Nie |
| Aktiviert | Aus | Immer | Immer |
| Nur Re-Trigger | Aus | Nie | Immer |
| Zeitlimitiert | Aus | Zeit < Zeitlimit | Immer |

Zusätzlich zu dem Triggerverhalten sind auch die Haltezeit/Nachleuchtdauer und die Zeit für den zeitlimitierten Triggermodus, z.B. über die Fernbedienung 9, einstellbar.

Für die Bedienung der Leuchte können ein Taster oder mehrere Taster vorgesehen sein, welche über das Tastenmodul 4 mit dem Leuchtensteuerungsmodul 1 kommunizieren.

Ein Taster kann dabei folgendermaßen konfiguriert sein:
- Klick: in und Ausschalten der Leuchte
- Drücken und Halten: Dimmt die Leuchte. Leuchte wird eingeschaltet und dimmt auf, falls sie ausgeschaltet war. Nach erneutem Drücken dimmt die Leuchte in die entgegengesetzte Richtung.
- Doppelklick: Speichert den aktuellen Sollwert der Helligkeitsregelung dauerhaft, falls dieser aktiviert wurde. Bei Betrieb ohne Regler wird die aktuelle Lampenleistung gespeichert. Zusätzlich lässt sich die Möglichkeit diese Speicherung durchzuführen in der Konfiguration deaktivieren.

Die Fernbedienung 9 kann nicht nur verwendet werden um die Leuchte zu konfigurieren, sondern auch um jene zu bedienen.

Folgende Tastenfunktionen können implementiert sein:

| | |
|---|---|
| On | Schaltet die Leuchte ein |
| Off | Schaltet die Leuchte aus |
| S | Wechselt zur nächsten Szene |
| RadiusA | Dimmt ab |
| RadiusB | Dimmt auf |

Weiter können einige grundlegende Parameter der Gerätekonfiguration angezeigt werden. Dazu wird M <ID> ENTER an der Fernbedienung 9 eingegeben. Die Anzeige betrifft nur boolesche Parameter bei denen für'ein' die LED kurz grün leuchtet und für'aus' rot.

Folgende Einstellungen können angezeigt werden:

| **ID** | **Einstellung** |
|---|---|
| 1 | BigOfifice Modus aktiviert |
| 2 | Bewegungsmelder aktiviert |
| 3 | Lichtregler aktiviert |
| 4 | Autostart aktiviert |
| 5 | Lichtwertüberspeicherung aktiviert |
| 6 | Schwarmfunktion aktiviert |

Leuchten, bei denen die Schwarmfunktion aktiviert ist, bleiben weiterhin vom Benutzer bedienbar. Jede Art von lokaler Bedienung via Taster, sowie Detektion von Bewegung durch den PIR, führt zum Zurücksetzen einer Haltezeit. Während diese Haltezeit noch läuft, ist die Leuchte eine Masterleuchte und reagiert somit nicht auf passive Schwarm Ereignisse. Eintreffende passive Ereignisse werden allerdings nicht vollständig ignoriert, sondern erst einmal gespeichert - ohne sonstige Reaktion. In dem Moment, in dem die Haltezeit abläuft, kann auf den korrekten, durch den zwischendurch vom Schwarm vorgegebenen, Lichtwert gewechselt werden. Weiter reagiert die Leuchte bei lokaler Bedienung exakt so, als wäre sie eigenständig. Nach einer initialen lokalen Bedienung wird die Anwesenheit des Bedieners für die Haltezeit angenommen. Diese wird jedoch zurückgesetzt, wenn Aktivität via PIR festgestellt wird.

Weiter steuert das Leuchtensteuermodul 1 das Leuchtmittel so, dass jedes empfangene, gültige Ereignis zum Einschalten der Leuchte und Einstellen der entsprechenden Helligkeit führt. Die Leuchte bleibt für die eingestellte Haltezeit aktiv und weitere empfangene Ereignisse setzen diese Haltezeit immer wieder zurück. Sollte ein neues Ereignis einem höheren Lichtniveau entsprechen, so wird die Leuchte die Helligkeit auf diesen neuen Wert ändern. Ereignisse mit niedrigerem Lichtniveau führen nicht direkt dazu, dass die Leuchte dunkler wird, sondern werden erst aktiv, wenn die Haltezeiten jener Ereignisse mit höherem Lichtniveau abgelaufen sind.

## Patentansprüche

1. Beleuchtungssystem mit einer Vielzahl von Leuchten (c1 bis c10 und f1 bis f9),
wobei jede Leuchte ein Leuchtensteuerungsmodul (1), ein Bewegungsmeldermodul (5) und ein Kommunikationsmodul (6) aufweist,
wobei das Leuchtensteuerungsmodul (1) jeder Leuchte mit dem Bewegungsmeldermodul (5) und dem Kommunikationsmodul (6) der jeweiligen Leuchte verbunden ist,
wobei das Kommunikationsmodul (5) über einen Funkkanal arbeitet und
wobei das Leuchtensteuerungsmodul (1) nach dem Empfang eines Funksignals einer anderen Leuchte, das eine Aktivität an dieser anderen Leuchte vermeldet und das die Koordinaten dieser anderen Leuchte in einem zweidimensionalen Koordinatensystem (X,Y) übermittelt, die Helligkeit und/oder die Farbe der jeweiligen Leuchte abhängig von den Signalen der anderen Leuchte und abhängig von der Position der anderen Leuchte in dem zweidimensionalen Koordinatensystem (X,Y) steuert,
**dadurch gekennzeichnet,**
**dass** jeder Leuchte vorab eine Positionsangabe in Form einer X-Koordinate und einer Y-Koordinate des zweidimensionalen Koordinatensystems (X,Y) fest zuordenbar ist und
**dass** das Leuchtensteuerungsmodul (1) jeder Leuchte dazu eingerichtet ist, die Helligkeit und/oder die Farbe der jeweiligen Leuchte zusätzlich abhängig von der vorab zugeordneten X-Koordinate und Y-Koordinate der jeweiligen Leuchte in dem zweidimensionalen Koordinatensystem (X,Y) zu steuern.

2. Beleuchtungssystem nach Anspruch 1, **dadurch gekennzeichnet, dass** jede Leuchte zusätzlich einen Helligkeitssensor aufweist, der mit dem Leuchtensteuerungsmodul (1) verbunden ist, wobei das Leuchtensteuerungsmodul die Helligkeit der jeweiligen Leuchte zusätzlich abhängig von der durch den Helligkeitssensor ermittelten Umgebungshelligkeit steuert.

3. Beleuchtungssystem nach einem der vorhergehenden Ansprüche, **dadurch gekennzeichnet, dass** das Leuchtensteuerungsmodul (1) jeder Leuchte zur Speicherung eines ersten vorbestimmten Helligkeitswerts mit einem zugehörigen ersten Radius eines ersten Erfassungsbereichs (A) und mindestens eines zweiten vorbestimmten Helligkeitswerts mit einem zugehörigen zweiten Radius eines zweiten Erfassungsbereichs (B) eingerichtet ist, wobei das Leuchtensteuerungsmodul (1) die Helligkeit der jeweiligen Leuchte abhängig von dem Vergleich des Abstands der jeweiligen Leuchte von einer anderen Leuchte, bei der eine Aktivität detektiert wurde, mit dem ersten Radius und mit dem zweiten Radius derart einstellt, dass in einem zu beleuchtenden Bereich der erste Helligkeitswert oder der zweite Helligkeitswert erreicht wird.

4. Beleuchtungsystem nach Anspruch 3, **dadurch gekennzeichnet, dass** zu dem ersten vorbestimmten Helligkeitswert und/oder dem mindestens einen zweiten vorbestimmten Helligkeitswert angebbar ist, ob eine jeweilige Grundhelligkeit über einen Direktanteil des Lichts und/oder einen Indirektanteil des Lichts der jeweiligen Leuchte erzeugt wird.

5. Beleuchtungssystem nach einem der vorhergehenden Ansprüche, **dadurch gekennzeichnet, dass** jede Leuchte mindestens einer Gruppe zugeordnet ist, wobei das Leuchtensteuerungsmodul (1) die Helligkeit und/oder die Farbe der jeweiligen Leuchte zusätzlich abhängig von der Zugehörigkeit der jeweiligen Leuchte zu einer Gruppe steuert.

6. Beleuchtungssystem nach einem der vorhergehenden Ansprüche, **dadurch gekennzeichnet, dass** die Position einer Leuchte in dem zweidimensionalen Koordinatensystem vorab automatisch mittels eines an der Leuchte angeordneten Ultraschallmoduls und des Kommunikationsmoduls (6) bestimmbar ist.

7. Beleuchtungssystem nach einem der vorhergehenden Ansprüche, **dadurch gekennzeichnet, dass** das Leuchtensteuerungsmodul (1) eine für die jeweilige Gruppe oder Leuchte individuelle Nachlaufzeit speichert, welche nach Feststellung der Beendigung einer Aktivität abgewartet wird, bevor die jeweilige Leuchte ausgeschaltet wird.

8. Beleuchtungssystem nach einem der vorhergehenden Ansprüche, **dadurch gekennzeichnet, dass** mindestens eine Leuchte jeweils ein Tastenmodul (4) aufweist, das mit dem Leuchtensteuerungsmodul verbunden ist, wobei mittels des Tastenmoduls die jeweilige Leuchte manuell ein- und ausschaltbar sowie dimmbar ist.

9. Beleuchtungssystem nach einem der vorhergehenden Ansprüche, **dadurch gekennzeichnet, dass** mindestens eine Leuchte ein Infrarot-Modul aufweist, so dass Parameter des Leuchtensteuerungsmoduls (1) mittels einer Fernbedienung, die über das Infrarot-Modul mit dem Leuchtensteuerungsmodul (1) kommuniziert, eingebbar sind.

10. Verfahren zur Steuerung einer Beleuchtung mit einer Vielzahl von Leuchten (c1 bis c10 und f1 bis f9), wobei jede Leuchte ein Leuchtensteuerungsmodul (1), ein Bewegungsmeldermodul (5) und ein Kommunikationsmodul (6) aufweist, wobei das Leuchtensteuerungsmodul (1) jeder Leuchte mit dem Bewegungsmeldermodul (5) und dem Kommunikationsmodul (6) der jeweiligen Leuchte verbunden ist, wobei das Kommunikationsmodul (6) über einen Funkkanal arbeitet,
wobei durch das Leuchtensteuerungsmodul (1) jeder Leuchte nach dem Empfang eines Funksignals einer anderen Leuchte, das eine Aktivität an dieser anderen Leuchte vermeldet und das die Koordinaten dieser anderen Leuchte in einem zweidimensionalen Koordinatensystem (X,Y) übermittelt, die Helligkeit und/oder die Farbe der jeweiligen Leuchte abhängig von den Signalen der anderen Leuchte und abhängig von der Position der anderen Leuchte in dem zweidimensionalen Koordinatensystem gesteuert wird, **dadurch gekennzeichnet,**
**dass** jeder Leuchte vorab eine Positionsangabe in Form einer X-Koordinate und einer Y-Koordinate des zweidimensionalen Koordinatensystems (X,Y) fest zugeordnet wird und
**dass** durch das Leuchtensteuerungsmodul (1) jeder Leuchte die Helligkeit und/oder die Farbe der jeweiligen Leuchte zusätzlich abhängig von der vorab zugeordneten X-Koordinate und Y-Koordinate der jeweiligen Leuchte in dem zweidimensionalen Koordinatensystem (X,Y) gesteuert wird.

11. Verfahren nach Anspruch 10, **dadurch gekennzeichnet, dass** jede Leuchte zusätzlich einen Helligkeitssensor aufweist, wobei durch das Leuchtensteuerungsmodul (1) die Helligkeit der jeweiligen Leuchte zusätzlich abhängig von der durch den Helligkeitssensor der jeweiligen Leuchte ermittelten Umgebungshelligkeit gesteuert wird.

12. Verfahren nach einem der Ansprüche 10 und 11, **dadurch gekennzeichnet, dass** das Leuchtensteuerungsmodul (1) jeder Leuchte einen ersten vorbestimmten Helligkeitswert mit einem zugehörigen ersten Radius eines ersten Erfassungsbereichs (A) und mindestens einen zweiten vorbestimmten Helligkeitswert mit einem zugehörigen zweiten Radius eines zweiten Erfassungsbereichs (B) speichert, wobei durch das Leuchtensteuerungsmodul (1) die Helligkeit der Leuchte abhängig von dem Vergleich des Abstands der jeweiligen Leuchte von einer anderen Leuchte, bei der eine Aktivität detektiert wurde, mit dem ersten Radius und mit dem zweiten Radius derart eingestellt wird, dass in einem zu beleuchtenden Bereich der erste Helligkeitswert oder der zweite Helligkeitswert erreicht wird.

13. Verfahren nach einem der Ansprüche 10 bis 12, **dadurch gekennzeichnet, dass** jede Leuchte mindestens einer Gruppe zugeordnet ist, wobei durch das Leuchtensteuerungsmodul (1) die Helligkeit und/oder die Farbe der jeweiligen Leuchte zusätzlich abhängig von der Zugehörigkeit der jeweiligen Leuchte zu einer Gruppe gesteuert wird.

14. Verfahren nach einem der Ansprüche 10 bis 13, **dadurch gekennzeichnet, dass** die Position einer Leuchte in dem zweidimensionalen Koordinatensystem vorab automatisch mittels eines an der jeweiligen Leuchte angeordneten Ultraschallmoduls und des Kommunikationsmoduls (6) bestimmt wird.

## Claims

1. A lighting system with a plurality of lights (c1 to c10 and f1 to f9), wherein each light has a light control module (1), a motion detector module (5) and a communications module (6), wherein
the light control module (1) of each light is connected to the motion detector module (5) and the communications module (6) of the respective light, wherein the communications module (5) operates via a radio channel, and wherein the light control module (1), after receiving a radio signal from another light reporting an activity on the said other light, and transmitting the coordinates of the said other light in a two-dimensional coordinate system (X, Y), controls the brightness and/or the colour of the respective light as a function of the signals of the other light and as a function of the position of the other light in the two-dimensional coordinate system (X, Y),
**characterised in that**, an indication of position in the form of an X-coordinate and a Y-coordinate of the two-dimensional coordinate system (X, Y) can be permanently assigned to each light in advance, and **in that**, the light control module (1) of each light is equipped for the purpose of additionally controlling the brightness and/or the colour of the respective light as a function of the previously assigned X-coordinate and Y-coordinate of the respective light in the two-dimensional coordinate system (X, Y).

2. The lighting system in accordance with claim 1, **characterised in that**, each light additionally has a brightness sensor, which is connected to the light control module (1), wherein the light control module additionally controls the brightness of the respective light as a function of the ambient brightness determined by the brightness sensor.

3. The lighting system in accordance with one of the preceding claims, **characterised in that**, the light control module (1) of each light is equipped to store a first predetermined brightness value with an associated first radius of a first detection zone (A), and at least one second predetermined brightness value with an associated second radius of a second detection zone (B), wherein the light control module (1) adjusts the brightness of the respective light as a function of the comparison of the distance of the respective light from another light, in which an activity has been detected, with the first radius and the second radius, such that in a region to be illuminated the first brightness value or the second brightness value is achieved.

4. The lighting system in accordance with claim 3, **characterised in that**, as to whether a respective basic brightness is generated via a direct component of the light, and/or an indirect component of the light of the respective light, can be assigned to the first predetermined brightness value, and/or to the at least one second predetermined brightness value.

5. The lighting system in accordance with one of the preceding claims, **characterised in that**, each light is assigned to at least one group, wherein the light control module (1) additionally controls the brightness and/or the colour of the respective light as a function of the assignment of the respective light to a group.

6. The lighting system in accordance with one of the preceding claims, **characterised in that**, the position of a light in the two-dimensional coordinate system can be automatically determined beforehand by means of an ultrasound module arranged on the light and the communications module (6).

7. The lighting system in accordance with one of the preceding claims, **characterised in that**, the light control module (1) stores an individual delay time for the respective group or light, which is allowed to elapse after the end of an activity, before the respective light is switched off.

8. The lighting system in accordance with one of the preceding claims, **characterised in that**, at least one light in each case has a key module (4), which is connected to the light control module, wherein by means of the key module, the respective light can be manually turned on and off and dimmed.

9. The lighting system in accordance with one of the preceding claims, **characterised in that**, at least one light has an infrared module, so that parameters of the light control module (1) can be input by means of a remote control unit, which communicates with the light control module via the infrared module.

10. A method for controlling a lighting system with a plurality of lights (c1 to c10 and f1 to f9), wherein each light has a light control module (1), a motion detector module (5) and a communications module (6), wherein the light control module (1) of each light is connected with the motion detector module (5) and the communications module (6) of the respective light, wherein the communications module (6) operates via a radio channel, wherein
by means of the light control module (1) of each light, after receiving a radio signal of another light, which reports an activity on the said other light, and transmits the coordinates of the said other light in a two-dimensional coordinate system (X, Y), the brightness and/or the colour of the respective light is controlled as a function of the signals of the other light and as a function of the position of the other light in the two-dimensional coordinate system,
**characterised in that**,
an indication of position in the form of an X-coordinate and a Y-coordinate of the two-dimensional coordinate system (X, V) can be permanently assigned to each light in advance, and **in that**, the light control module (1) of each light additionally controls the brightness and/or the colour of the respective light as a function of the previously assigned X-coordinate and Y-coordinate of the respective light in the two-dimensional coordinate system (X, Y).

11. The method in accordance with claim 10, **characterised in that**, each light additionally has a brightness sensor, wherein the brightness of the respective light is additionally controlled by the light control module (1) as a function of the ambient brightness determined by the brightness sensor of the respective light.

12. The method in accordance with one of the claims 10 to 11, **characterised in that**, the light control module (1) of each light stores a first predetermined brightness value with an associated first radius of a first detection zone (A) and at least one second predetermined brightness value with an associated second radius of a second detection zone (B), wherein the light control module (1) adjusts the brightness of the light as a function of the comparison of the distance of the respective light from another light, in which an activity has been detected, with the first radius and the second radius, such that in a region to be illuminated the first brightness value or the second brightness value is achieved.

13. The method in accordance with one of the claims 10 to 12, **characterised in that**, each light is assigned to at least one group, wherein by means of the light control module (1) the brightness and/or the colour of the respective light is additionally controlled as a function of the assignment of the respective light to a group.

14. The method in accordance with one of the claims 10 to 13, **characterised in that**, the position of a light in the two-dimensional coordinate system can be automatically determined in advance by means of an ultrasound module arranged on the respective light and the communications module (6).

## Revendications

1. Système d'éclairage, disposant d'une pluralité de lampes (c1 à c10 et f1 à f9), chaque lampe comportant un module pilote de lampe (1), un module détecteur de mouvements (5) et un module de communication (6),
le module pilote de lampe (1) de chaque lampe étant relié avec le module détecteur de mouvements (5) et le module de communication (6) de la lampe concernée, le module de communication (5) fonctionnant par l'intermédiaire d'un canal radio et après avoir réceptionné un signal radio d'une autre lampe qui fait part d'une activité sur ladite autre lampe et qui transmet les coordonnées de ladite autre lampe dans un système de coordonnées bidimensionnel (X, Y), le module pilote de lampe (1) pilotant la luminosité et/ou la teinte de la lampe concernée en fonction des signaux de l'autre lampe et en fonction de la position de l'autre lampe dans le système de coordonnées bidimensionnel (X, Y),
**caractérisé en ce que** préalablement, une indication de position, sous la forme d'une coordonnée X et d'une coordonnée Y du système de coordonnées bidimensionnel (X, Y) est fixement affectable à chaque lampe et **en ce que** le module pilote de lampe (1) de chaque lampe est aménagé pour piloter la luminosité et/ou la teinte de la lampe concernée en supplément en fonction de la coordonnée X et de la coordonnée Y préalablement affectée de la lampe concernée dans le système de coordonnées bidimensionnel (X, Y).

2. Système d'éclairage selon la revendication 1, **caractérisé en ce que** chaque lampe comporte en supplément un capteur de luminosité qui est relié avec le module pilote de lampe (1), le module pilote de lampe pilotant la luminosité de la lampe concernée en supplément en fonction de la luminosité ambiante déterminée par le capteur de luminosité.

3. Système d'éclairage selon l'une quelconque des revendications précédentes, **caractérisé en ce que** le module pilote de lampe (1) de chaque lampe est aménagé pour mémoriser une première valeur de luminosité prédéfinie avec un premier rayon correspondant d'une première zone de détection (A) et au moins une deuxième valeur de luminosité prédéfinie, avec un deuxième rayon correspondant d'une deuxième zone de détection (B), le module pilote de lampe (1) réglant la luminosité de la lampe concernée avec le premier rayon et avec le deuxième rayon, en fonction de la comparaison de l'écart de la lampe concernée par rapport à une autre lampe de telle sorte que dans une zone qui doit être éclairée, la première valeur de luminosité ou la deuxième valeur de luminosité soit atteinte.

4. Système d'éclairage selon la revendication 3, **caractérisé en ce qu'**en ce qui concerne la première valeur de luminosité prédéfinie et/ou l'au moins une deuxième valeur de luminosité prédéfinie, il peut être indiqué si une luminosité de base respective est générée par une part directe de la lumière et/ou une part indirecte de la lumière de la lampe concernée.

5. Système d'éclairage selon l'une quelconque des revendications précédentes, **caractérisé en ce que** chaque lampe est affectée à au moins un groupe, le module pilote de lampe (1) pilotant la luminosité et/ou la teinte de la lampe concernée en supplément en fonction de l'appartenance de la lampe à un groupe.

6. Système d'éclairage selon l'une quelconque des revendications précédentes, **caractérisé en ce que** la position d'une lampe dans le système de coordonnées bidimensionnel peut être préalablement définie automatiquement au moyen d'un module à ultrasons placé sur la lampe et du module de communication (6).

7. Système d'éclairage selon l'une quelconque des revendications précédentes, **caractérisé en ce que** le module pilote de lampe (1) mémorise pour le groupe ou la lampe concerné(e) un temps de poursuite individuel pendant lequel il est attendu, après constatation de l'achèvement d'une activité, avant la coupure de la lampe concernée.

8. Système d'éclairage selon l'une quelconque des revendications précédentes, **caractérisé en ce qu'**au moins une lampe comporte respectivement un module à touches (4) qui est relié avec le module pilote de lampe, au moyen du module à touches, la lampe concernée pouvant être allumée ou éteinte manuellement, ainsi que réglée en intensité.

9. Système d'éclairage selon l'une quelconque des revendications précédentes, **caractérisé en ce qu'**au moins une lampe comporte un module à infrarouges, de sorte que des paramètres du module pilote de lampe (1) puissent être saisis au moyen d'une télécommande, qui communique par l'intermédiaire du module à infrarouges avec le module pilote de lampe.

10. Procédé destiné à piloter un éclairage, disposant d'une pluralité de lampes (c1 à c10 et f1 à f9), chaque lampe comportant un module pilote de lampe (1), un module détecteur de mouvements (5) et un module de communication (6), le module pilote de lampe (1) de chaque lampe étant relié avec le module détecteur de mouvements (5) et le module de communication (6) de la lampe concernée, le module de communication (6) fonctionnant par l'intermédiaire d'un canal radio,
après avoir réceptionné un signal radio d'une autre lampe qui fait part d'une activité sur ladite autre lampe et qui transmet les coordonnées de ladite autre lampe dans un système de coordonnées bidimensionnel (X, Y), le module pilote de lampe (1) pilotant le luminosité et/ou la teinte de la lampe concernée en fonction des signaux de l'autre lampe et en fonction de la position de l'autre lampe dans le système de coordonnées bidimensionnel,
**caractérisé en ce**
**qu'**à chaque lampe, il est préalablement fixement affecté une indication de position sous la forme d'une coordonnée X et d'une coordonnée Y du système de coordonnées bidimensionnel (X, Y) et en ce que par le module pilote de lampe (1) de chaque lampe, la luminosité et/ou la teinte de la lampe concernée est pilotée en supplément en fonction de la coordonnée X et de la coordonnée Y préalablement affectée de la lampe concernée dans le système de coordonnées bidimensionnel (X, Y).

11. Procédé selon la revendication 10, **caractérisé en ce que** chaque lampe comporte en supplément un capteur de luminosité, le module pilote de lampe (1) pilotant la luminosité de la lampe concernée en supplément en fonction de la luminosité ambiante détectée par le capteur de luminosité de la lampe concernée.

12. Procédé selon l'une quelconque des revendications 10 et 11, **caractérisé en ce que** le module pilote de lampe (1) de chaque lampe mémorise une première valeur de luminosité prédéfinie avec un premier rayon correspondant d'une première zone de détection (A) et au moins une deuxième valeur de luminosité prédéfinie avec un deuxième rayon correspondant d'une deuxième zone de détection (B), le module pilote de lampe (1) réglant avec le premier rayon et avec le deuxième rayon la luminosité de la lampe en fonction de la comparaison de l'écart de la lampe concernée par rapport à une autre lampe sur laquelle une activité a été détectée, de telle sorte que dans une zone qui doit être éclairée, la première valeur de luminosité ou la deuxième valeur de luminosité soit atteinte.

13. Procédé selon l'une quelconque des revendications 10 à 12, **caractérisé en ce que** chaque lampe est affectée à au moins un groupe, le module pilote de lampe (1) pilotant la luminosité et/ou la teinte de la lampe concernée en supplément en fonction de l'appartenance de la lampe concernée à un groupe.

14. Procédé selon l'une quelconque des revendications 10 à 13, **caractérisé en ce que** la position d'une lampe dans le système de coordonnées bidimensionnel est préalablement déterminée automatiquement au moyen d'un module à ultrasons placé sur la lampe concernée et du module de communication (6).
